# EUROPEAN PATENT SPECIFICATION

(11) **EP 4 433 272 B1**
(45) Date of publication and mention of the grant of the patent: **11.02.2026**
(21) Application number: 22769365.2
(22) Date of filing: 10.08.2022
(51) Int. Cl.: B29B 11/14, B29C 49/00, B29L 9/00, B65D 83/00, B67D 1/04, B29L 31/00

(54) **AN ASSEMBLED PREFORM FOR THE MAKING OF A DOUBLE-WALLED BLOWN CONTAINER**
ZUSAMMENGESETZTE DOPPELWANDVORFORM UND VERFAHREN ZU IHRER HERSTELLUNG
PRÉFORME ASSEMBLÉE À DOUBLE PAROI ET SON PROCÉDÉ DE FABRICATION

(30) Priority: 10.08.2021 IT 202100021641
(43) Date of publication of application: 25.09.2024
(73) Proprietor: DAUNIA PLAST S.p.A., 76015 Trinitapoli (BT) (IT)
(72) Inventor: DE PASQUALE, Mauro, 76015 TRINITAPOLI (BT) (IT)
(74) Representative: Cipriani, Guido
(86) International application number: PCT/IB2022/057483
(87) International publication number: WO 2023/017449

(56) References cited:
- WO-A1-2021/137189
- WO-A1-2021/202234
- US-A1- 2018 043 604
- US-A1- 2018 044 096
- US-A1- 2020 094 441

## Description

The present invention refers to a double-walled preform for the making of double-walled containers following to the blowing of said preform and, more precisely, to an assembled preform which consists of two concentric preforms where a first internal preform is fixedly inserted inside a second external preform. The present invention also relates to the manufacturing process of the aforesaid double-walled preform.

The present invention finds application in all fields where a container intended to contain liquids requires adequate barrier protections which a double-walled container can provide, and to preserve the characteristic properties of the contained liquid over time.

### State of the art

As is known, containers obtained by blowing PET preforms or similar material are intended to contain liquids in various product sectors: beverage, chemical, pharmaceutical, food, etc.

For certain uses and applications, it is necessary to make blown PET containers or similar material, and where such containers have double walls. More precisely, the system of providing two concentric preforms is used when it is necessary to improve and enhance some characteristics that cannot be obtained using a single preform. The constructive solution of a double walled container is particularly suitable for containers intended to contain liquids which require adequate protection to preserve their characteristic properties, and by preserving the liquid product from contacting with air or other environments that can alter the chemical composition of the product.

For example, typical is the case of a traditional container which, when partially emptied, shows an increase in the head space with a corresponding increase in the amount of air in contact as the product comes out of the container. One of these conditions occurs for beer kegs.

In fact, in traditional containers, the beer is dispensed by blowing CO₂. The head space as the beer is dispensed is enriched with CO₂, altering the balance between the liquid phase and the gaseous phase of the beer contained in the keg.

For the construction of a double-walled container, the blowing of two preforms made in PET or similar material is provided for the making thereof, in which a first preform is inserted coaxially inside a second preform.

According to this embodiment, it is possible to give the two individual preforms different mechanical features depending on the final use of the container and according to the liquid to be contained.

For example, it is possible to obtain a container, through the blowing process of two preforms, wherein the external preform will have the function of mechanically protecting the internal container, while the internal preform, which is the one destined to receive the liquid, will have all the characteristics and treatments necessary to preserve the properties of the liquid contained (for example, O₂ barrier, CO₂ barrier, UV barrier, etc.).

As examples of the above technology, from WO2021137189A1 a double-walled preform and a method for the making of such a double-walled preform is disclosed. According to this document, an assembled preform (1) for the making of a double-walled blown container is disclosed, the preform being characterized in that a neck region of the internal preform comprises locking means integrally obtained on the material of said second preform and suitable for cooperating by a locked interference with the neck part of the external preform when said second internal preform is inserted in said external preform.

As examples of the above technology, from WO2021137189A1 a double-walled preform and a method for the making of such a double-walled preform is disclosed. According to this document, an assembled preform (1) for the making of a double-walled blown container is disclosed, the preform being characterized in that a neck region of the internal preform comprises locking means integrally obtained on the material of said second preform and suitable for cooperating by a locked interference with the neck part of the external preform when said second internal preform is inserted in said external preform.

On the other hand, from WO2021202234A1 a preform assembly and a method of manufacturing a pressurized polymeric container is disclosed. According to this document, a plural preform assembly includes an outer preform and an inner preform. The inner preform may be disposed in the outer preform. The inner preform has an inner preform intrinsic viscosity and the outer preform has an outer preform intrinsic viscosity, the inner preform intrinsic viscosity and the outer preform intrinsic viscosity are different. The plural preform assembly may be blow molded into an article when both preforms are couple one into the other.

From US2018043604A1 a plural nested preform assembly and method of manufacture thereof is disclosed. According to this document, a plural preform assembly has nested preforms. The preforms are held together by an interference fit. The interference fit is provided by the friction between the preforms which occurs when the inner preform is inserted into the outer preform. At least one preform may have ribs extending radially towards the other preform. The ribs provided concentricity and interference to hold the preforms together during subsequent operations. The preforms may later be blow molded to provide a bag in bottle or similar container.

From US2020094441A1 a set of preforms for making a container is disclosed. According to this document, it is disclosed a set of preforms to make a container for beverages, comprising an external preform and an internal preform, each intended to form respectively an external keg and an internal bag of the container. The internal preform is associated internally with the external preform in order to define with the external preform a hollow space. The external preform and the internal preform have respective coupling members suitable to clamp the external preform and the internal preform with respect to each other in a desired reciprocal position.

This constructive solution entails the disadvantage given by the fact that during the production process of a double preform it is provided the step of inserting the internal preform into the external preform, which is normally carried out upstream of the blowing line. This assembly operation is performed by sending the two preforms separately to an expensive automation system which inserts the two preforms one into the other,and conveying them to the next blowing phase for the production of the container.

On the other hand, according to an alternative production process to the one above indicated, the internal and external preform are assembled downstream of the production line. This alternative constructive solution has the disadvantage that consists in the fact that the assembled preform is fixed through an expensive welding system so as to prevent the two preforms from slipping off during their handling.

The present invention aims to solve the aforementioned disadvantages by providing an assembled double-walled preform and its production process, wherein the assembly of the two preforms (internal and external) is provided in a permanent, simple and effective way.

Thanks to the technical solution of the present invention, the double-walled container is thus obtained by blowing an already assembled preform which contains a first and a second preform inserted coaxially into the first preform in a locked manner.

Therefore, the object of the present invention is to provide two preforms with a geometry such as to allow a fixed and permanent assembly of one preform inside the other, in such a manner to ensure that during the necessary handling both for the transporting of the preforms and for their processing up to the blowing of the same, the stability of the assembly be not compromised.

### BRIEF DESCRIPTION OF THE INVENTION

The object of the present invention is a process for the production of an assembled concentric preform with a double wall, which comprises a first internal preform inserted coaxially into a second external preform, and wherein the two concentric preforms are mechanically assembled in an irreversible manner in such a way as to form a single indivisible body.

According to an aspect of the present invention, the two concentric preforms are irreversibly coupled and can be moved and processed as if they were a single preform.

According to another aspect of the present invention, the two preforms are produced individually, with materials which can be both homogeneous or inhomogeneous.

The assembled double-walled concentric preform obtained by the aforesaid process also forms an object of the present invention.

Therefore, the present invention provides a process for manufacturing a double-walled preform, and an assembled preform thus obtained substantially according to the appended claims.

### DETAILED DESCRIPTION OF THE INVENTION

A detailed description will now be provided of two preferred embodiments of a double-walled preform and the relevant assembly process according to the present invention, given by way of non-limiting example, with reference to the attached figures, wherein:
Figure 1 illustrates a longitudinal sectional view of an assembled double-walled preform according to the state of the art;
Figure 2 is a partially sectional and detailed view of a part of the assembled preform of Figure 1;
Figure 3 is a longitudinal sectional view of a first external preform which is a part of the assembled double-walled preform of the present invention;
Figure 4 is a partial perspective and detailed view of a part of the external preform of Figure 3;
Figure 5 is an elevational view of a first embodiment of the internal preform which is a part of the assembled preform of the present invention;
Figure 6 is a longitudinal sectional view of the internal preform of Figure 5;
Figure 7 is a perspective view of the internal preform of Figure 5;
Figure 8 is a perspective view of a second embodiment of the internal preform which is a part of the assembled preform of the present invention; and
Figure 9 is a perspective and partially longitudinal sectional view of the neck region of a blown container obtained with the assembled preform of the present invention.

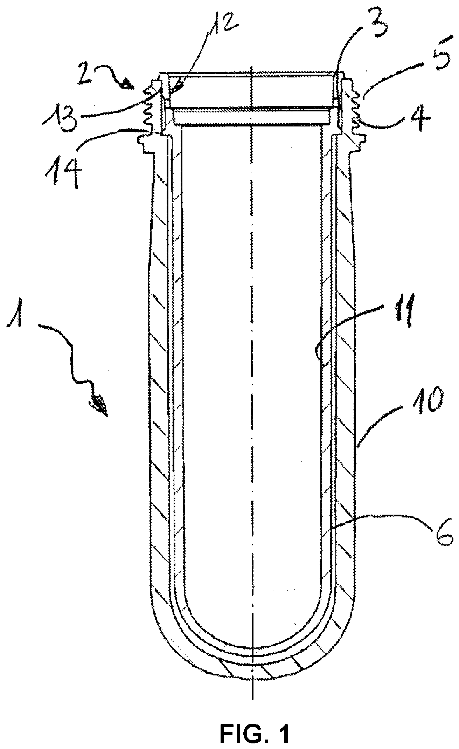

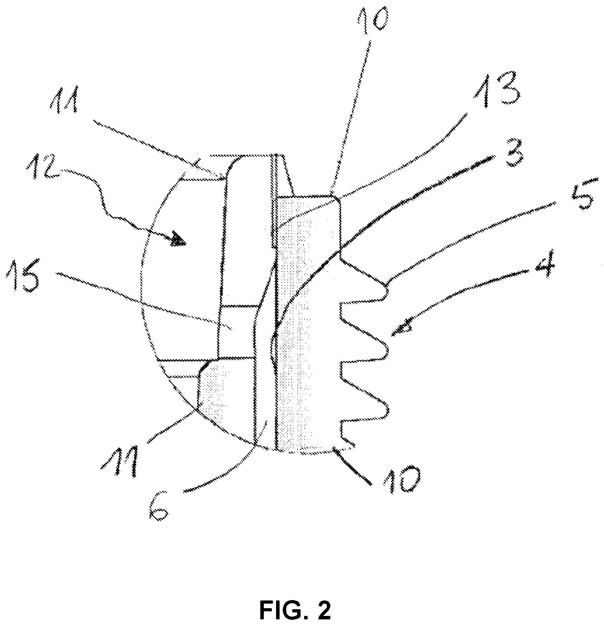

With reference now to Figures 1 and 2, a state of the art double walled assembled preform is illustrated therein.

As can be seen in Figure 1, an assembled preform 1 is provided consisting of a first external preform 10 and a second internal preform 11 inserted inside the first external preform 10, both the external 10 and the internal preform 11 typically have a cylindrical profile.

The external preform 10 has a neck region 2 which includes a substantially smooth internal surface 3, and an external surface 4 which constitutes the thread 5 for coupling with a relevant cap (not shown in the figures) in the manner already known.

On the other hand, the internal preform 11 can be completely included/contained inside the external preform 10 or, alternatively, surmounting the latter for a short distance (as shown in Figures 1 and 2).

Similarly to the external preform 10, the internal preform 11 also has a neck region 12 which has an inner surface which is normally cylindrical or slightly frusto-conical in shape, and an outer surface which typically has two contacting regions 13 and 14 for interfacing on the inner surface 3 of the respective neck region 2 of the external preform 10 (better illustrated below).

As can be seen in the figure, both the external 10 and the internal 11 preform once assembled generate a space 6 between the external preform 10 and the internal preform 11, the space 6 being able to generate a volume of gas in the blown container which is functional for operation of the latter (better illustrated below).

As can be seen in Figure 2, once the two internal 11 and external 10 preforms have been assembled, the contacting region 13 at the outer surface of the neck region 12 of the internal preform 11 interfaces with interference on the inner surface 3 of the neck region 2 of the external preform 10, and in such a manner as to create one or more interference areas which allow the two assembled preforms 10 and 11 to be mutually locked in a solid and permanent manner one inside the other.

Similarly and as illustrated in Figure 1, when the internal preform 11 is assembled inside the external preform 10, the contacting region 14 at the outer surface of the neck region 12 of the internal preform 11 interfaces with interference at the inner surface 3 of the neck region 2 of the external preform 10, thereby creating an interference area which allows said two preforms 10 and 11 to be mutually locked in a solid and permanent manner one inside the other.

Further, as can be seen in Figure 2, at least one pair of holes 15 are provided on the surface of the neck region 12 (only one of which being shown in the figure). Once the external 10 and internal 11 preforms have been assembled, the holes 15 are designed to allow the inner volume 6 pneumatically communicating with the external environment in order to let the gas flow from/to said inner volume 6.

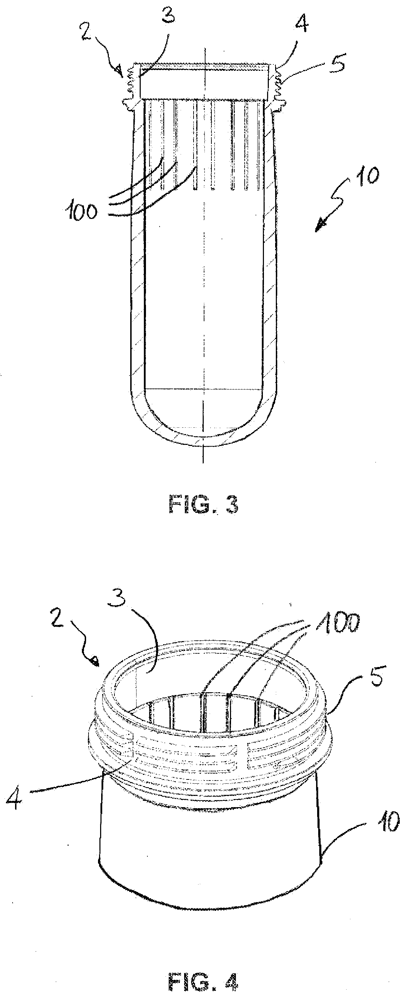

With reference now to Figures 3 and 4, a first external preform which forms part of the assembled double-walled preform of the present invention is illustrated in a detailed longitudinal section view.

For the sake of clarity, same parts will have same numbers and the detailed description thereof will be here omitted as already given above.

According to the present embodiment, an external preform 10 is provided having a neck region 2, said neck region 2 having an inner surface 3 and an outer surface 4 on which a thread 5 is formed (for the purpose and in the manner already known) .

On the inner surface of the external preform 10 and at a region below the neck region 2, a series of longitudinal grooves 100 are formed in the material of the external preform 10. As it will be better illustrated below, the function of the series of grooves 100 is to create preferential gas flow channels from / to the inner volume 6 and through the neck region 12 of the second internal preform 11, when the latter is assembled inside the first external preform 10 (the internal preform 11 not being shown in the figure) .

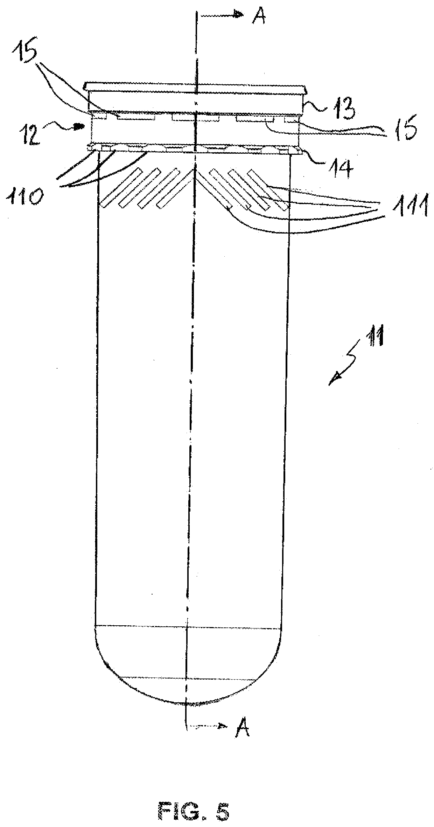

With reference now to Figure 5, an internal preform 11 according to a first embodiment of the present invention is shown.

For the sake of clarity, same parts will have same numbers and the detailed description thereof will be omitted here been already given above.

According to this first embodiment, the internal preform 11 has a neck region 12 which has an inner surface which is normally cylindrical or slightly frusto-conical in shape, and an outer surface which has two contacting regions 13 and 14 for interfacing with interference onto the surface 3 of the respective neck region 2 of the outer preform 10 when the internal preform 11 is inserted into the external preform 10 (the latter not being shown in the figure).

The contacting region 13 is a substantially smooth annular region, while the contacting region 14 consists of a protruding annular edge, which has a series of vertical grooves 110, which are adapted to cooperate with the grooves 100 of the external preform 10 when the internal preform 11 is assembled inside the external preform 10 (the latter not in the figure), and in such a manner as to create preferential gas flow channels from/to the inner volume 6 and through the neck region 12 of the internal preform 11.

Further, at the region below the contacting region 14, a series of protruding elements 111 are integrally formed on the body material of the second preform 11, and having a longitudinal shape and are arranged in an inclined manner with respect to the longitudinal axis of the inner preform 11. It is necessary here to point out that, similarly to the grooves 110, also the series of protruding elements 111 are capable to cooperate with the grooves 100 when the internal preform 11 is assembled inside the external preform 10 (the latter not in the figure), and in such a manner as to create preferential gas flow channels from/to the inner volume 6 and through the neck region 12 of the internal preform 11.

Furthermore, at the neck region 12 defined between the two contacting regions 13 and 14, a series of rectangular slot-shaped ports 15 are formed, perimetrically arranged onto the neck region 12, each port 15 communicating the outer surface of the neck region 12 with the inner surface of the latter (better illustrated below).

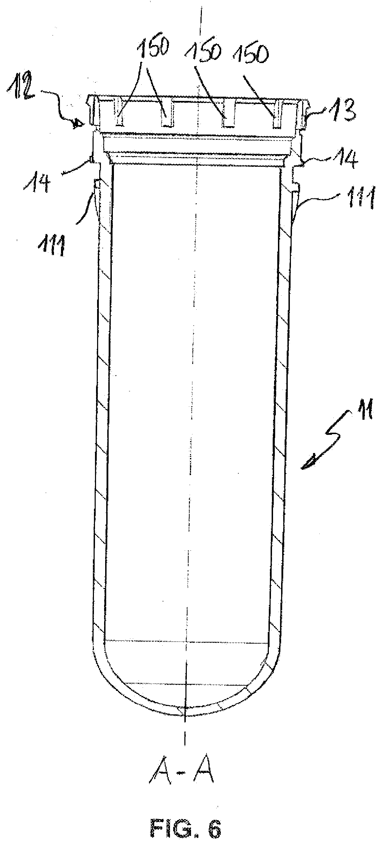

With reference now to Figure 6, the inner preform 11 of Figure 5 is illustrated in a longitudinal section view A-A. AS can be seen in the figure, the inner surface of the neck region 12 has a series of longitudinal grooves 150 which are arranged in a vertical manner, and each communicating with a respective port 15.

It will be apparent to those skilled in the art that the arrangement of the ports 15 and the associated grooves 150 is such that once the double-walled preform 1 has been assembled, a series of communication channels are created for the flow of gas to/from the inner volume 6 and through the neck region 12 of the internal preform 11 and towards the outside of the preform 1 through the ports 15 and the relevant grooves 150.

This arrangement allows the flow of the gas contained in the inner volume 6 during operation and/or emptying of the blown container obtained with the aforementioned assembled preform 1 of the present invention.

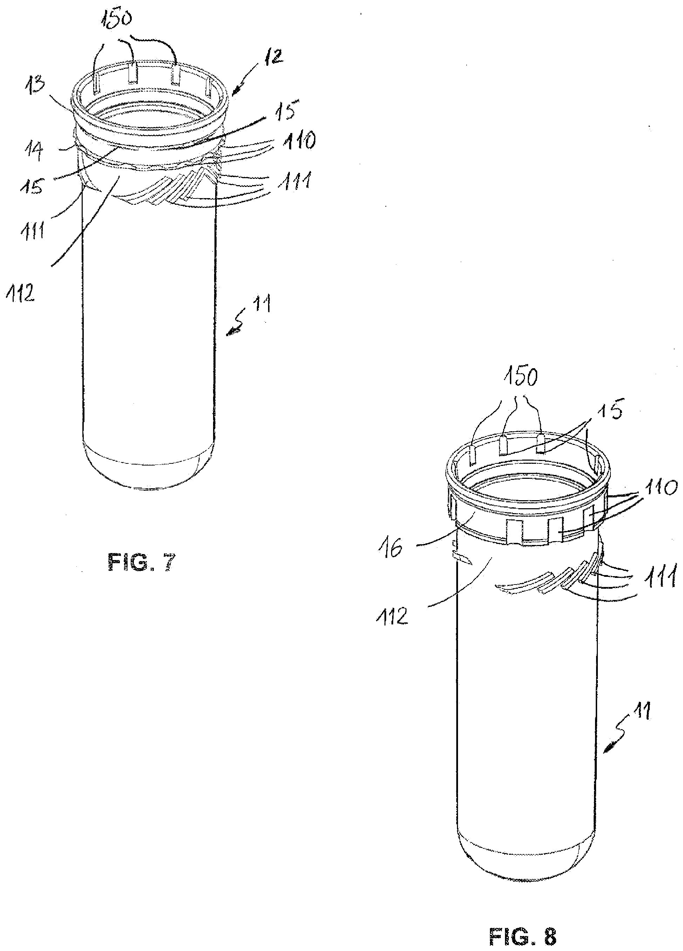

With reference now to Figure 7, the internal preform 11 of the present invention is illustrated in a perspective view from one side and from above.

As can be seen in the figure, the arrangement of the protruding elements 111 on the outer surface of the internal preform 11 is such that they are arranged in an inclined manner with respect to the longitudinal axis of the preform 11. Further, they are grouped into groups of protruding elements 111 and separated one group from the other, and in such a way as to define a region 112 which is free from protruding elements 111. It should be noted here that the arrangement of the protruding elements 111 is such that once the preform 1 has been assembled (that is, when the internal preform 11 is inserted inside the external preform 10, the latter not in the figure), the series of protruding elements 111 allows the gas inside in the inner volume 6 to flow out faster by cooperating with the grooves 100 with a whirling motion, and through the ports 15 and 150 in the neck region 12 of the internal preform 11 towards the outside of the preform 1.

With reference now to figure 8, a second embodiment of the internal preform 11 according to the present invention is illustrated in a perspective view from one side and from above.

For the sake of clarity, same parts will have the same numbers and the detailed description thereof will be here omitted as already given above.

As can be seen in the figure, this second embodiment differs from the previous one in that the contacting region between the internal preform 11 and the external preform 10 (the latter not in the figure) consists of a single substantially smooth annular surface 16 obtained at the external surface of the neck region 12. The contacting surface 16 has a plurality of longitudinal grooves 110, each of which communicating with a respective groove 150 (located at the inner surface of the neck region 12) and each communicating with the other through a respective opening 15. Further, the arrangement of the protruding elements 111 at the outer surface of the inner preform 11 is inclined with respect to the longitudinal axis of the inner preform 11 as per the first embodiment.

Similar to the previous embodiment, the protruding elements 111 are grouped into groups of protruding elements 111 and separated one group from the other, and in such a way as to define a region 112 free from protruding elements 111. This arrangement, once assembled the preform 1 (that is, when the internal preform 11 is inserted inside the external preform 10, the latter not in the figure), it allows the gas in the inner volume 6 to flow out faster by cooperating with the grooves 100 and the elements 111 with a whirling motion, and through the grooves 110, the ports 15, and the grooves 150 at the neck region 12 of the inner preform 11 towards the outside of the preform 1.

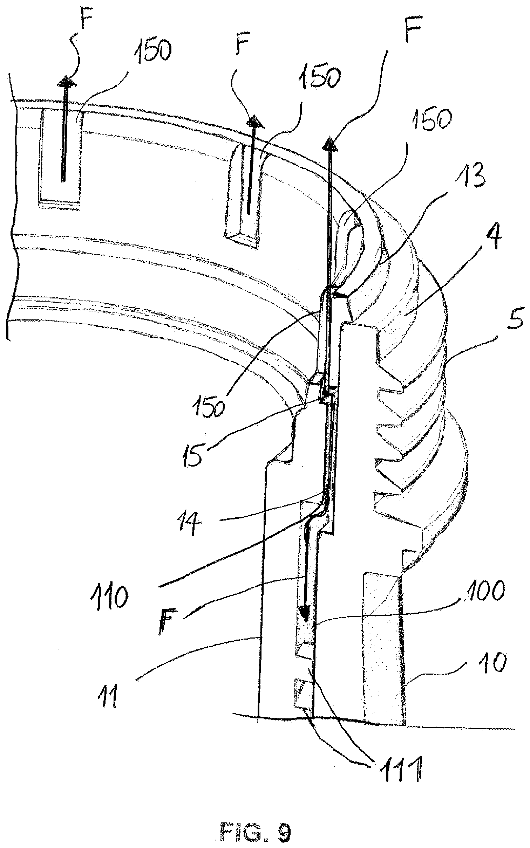

With reference now to Figure 9, a perspective and partial longitudinal sectional view of the neck region of a blown container obtained with the assembled preform of the present invention it is shown, and wherein the preferential flow channel of the gas coming from the inner volume 6 to the outer environment during the operation and/or emptying of the blown container obtained with the preform of the present invention it is illustrated.

More precisely, once the preform 1 has been assembled according to the embodiments described above, the same it is blown according to an industrial process as already known in the state of the art, and with the aim of obtaining a double-walled blown container (only the top region of the neck region of the container being illustrated in the figure).

The container thus obtained has an inner volume for containing a liquid, as for example a gaseous drink or the like, and a second volume defined by the inner space existing between the two walls (internal and external), the second volume surrounding the internal wall of the container.

The container neck does not undergo plastic deformations during the forming (blowing) phase of the preform, thus preserving the original structure of the assembled preform. According to the present invention, the coupling at the contacting regions 13, 14 or 16 between the two preforms 10 and 11 is preferably chosen with an interference comprised in the range of 0.2 mm, but can be included in the range from 0.02 mm up to 0.5 mm depending on the applications and the final volume of the double-walled container obtained after the blowing of the assembled preform.

Therefore, as illustrated in the figure and according to the present invention, the arrangement of the grooves 100 on the inner wall of the external preform, and of the grooves 110 and of the ports 15 and 150 and of the protruding elements 111 on the outer wall of the internal preform is such that a preferential channel is obtained as illustrated by the arrows F, and into which channel the gas contained in the inner volume 6 between the external wall 10 and the internal wall 11 can flow more easily and quickly during operation and/or emptying of the blown container (i.e., both during filling up the blown container, during the emptying of the blown container, and during the recycling of the container).

The facilitated flow of the gas through the aforementioned grooves 100,110,15,150 allows to ensure the absence of an overpressure inside the container, which could compromise the safety of the operators.

A description of the manufacturing process of the assembled preform 1 will now be provided.

First, the external preform 10 and the internal preform 11 are separately formed, each by injection moulding in a respective mould, and with a material which is chosen according to the applications for which the double-walled container is intended for, the container being obtained by blowing the said double preform 1 once coupled.

Subsequently, the internal preform 11 is inserted inside the external preform 10 until the neck part 12 of the internal preform 11 rests on the neck part 3 of the external preform 10.

Then, the inner preform 11 is pushed inside the outer preform 10 by interference forcing the coupling at the coupling surfaces 13 and 14 or 16 (depending on the embodiment) on the inner surface 3 of the neck region 2 of the preform 10 and as previously illustrated in the figures.

In this condition, the preform 1 is irreversibly assembled, and it is ready for the subsequent production steps for obtaining a double-walled blown container, and according to a production process which is already known in the state of the art.

### Advantages

The present invention has numerous advantages.

A first advantage is given by the fact that transport costs are halved, since the transporting of two separate preforms it is not provided anymore, but instead only one assembled preform is foreseen.

A second advantage is given by the fact that the reduction of the transport costs allows a notable widening of the markets and a notable widening of the fields of use of the concentric preforms.

A third advantage is given by the fact that the so assembled double preform can be fed directly into the blow moulding machine, eliminating the expensive automation system for the inserting of the two preforms one into the other.

A fourth advantage is given by the fact that anyone who owns an already existing blow moulding machine is able to use the present preform without resorting to the automatic system which, in addition to being expensive, makes the system more complex by lowering its reliability.

## Claims

1. Assembled preform (1) for the making of a double-walled blown container, comprising a first external preform (10) which comprises a neck part (2) having an outer region (4) which includes a threaded region (5) and an inner region (3), and a second internal preform (11) arranged inside said first external preform (10), said internal preform (11) having a neck region (12) for cooperating in a locked manner with said inner neck region (3) of said external preform (10), and wherein between said external preform (10) and said internal preform (11) it is defined an inner volume (6) of interspace between the external preform (10) and the internal preform (11), said inner volume (6) being configured for the containing of a gas,
wherein said neck region (12) of said internal preform (11) comprises locking means (13,14,16) for cooperating by a locking interference with said inner region (3) of said neck part (2) of said external preform (10) when said internal preform (11) it is inserted in said external preform (10), and wherein said locking means comprises two protruding annular contacting surfaces (13,14) integrally formed onto said neck region (12) of said internal preform (11), said annular protruding surfaces (13,14) being configured for cooperating by a locking interference with respective parts of neck region (3) of said external preform (10) when the first is inserted inside the second,
wherein said locking means comprises an annular contacting surface (16) integrally formed at said neck region (12) of said internal preform (11), said annular contacting surface (16) being configured for cooperating by a locking interference with a respective part of the neck region (3) of said external preform (10) when the first is inserted inside the second,
wherein said locking interference between said two preforms (10,11) is selected in the range comprised from 0.02 mm up to 0.5 mm,
**characterized in that** said internal preform (11) further comprises:
- said protruding contacting region (13) at the outer surface of the neck region (12) consists of a substantially smooth annular region,
- said protruding contacting region (14) at the outer surface of the neck region (12) consists of a protruding annular edge, which has a series of vertical grooves (110);
- a series of ports (15) each shaped like a rectangular slot, and being perimetrically formed at the neck region (12), each port (15) communicating said outer surface of the neck region (12) with the inner surface of the latter, and wherein each port (15) communicates with a longitudinal and vertically shaped groove (150) arranged and formed at said inner surface of said neck region (12); and
- at a region below said protruding contacting region (14), a series of protruding elements (111) are integrally formed onto the surface of the internal preform (11), said elements (111) having a longitudinal shape and being arranged in an inclined manner with respect to the longitudinal axis of said internal preform (11).

2. Assembled preform (1) according to the preceding claim, wherein said internal preform (11) further comprises:
- said contacting surface at said outer surface of said neck region (12) of said internal preform (11) consists of a continuous substantially smooth annular surface (16);
- said contacting surface (16) having a plurality of longitudinal grooves (110) each of which communicating with a respective groove (150) formed onto said inner surface of said neck region (12) and each communicating with the other through a respective opening (15); and
- at a region below said contacting surface (16), a series of protruding elements (111) are integrally formed onto the surface of said internal preform (11), the elements (111) having a longitudinal shape and being arranged in an inclined manner with respect to the longitudinal axis of the preform (11).

3. Assembled preform (1) according to any of the preceding claims, wherein at said inner surface (3) of said neck region (2) of said external preform (10) it is integrally formed in the material of said preform (10) a series of longitudinal grooves (100), the arrangement of said series of longitudinal grooves (100) being such that once said preform (1) has been assembled, a series of preferential gas flow channels from/towards said inner volume (6) is created, and through said neck region (12) of said internal preform (11), and
wherein the arrangement of said protruding elements (111) of said internal preform (11) is such that once said preform (1) has been assembled, a series of preferential gas channels is created cooperating with said grooves (100), the arrangement being such that the gas flows from the inner volume (6) towards the outside of the preform (1), and through said grooves (110), said ports (15), and said grooves (150) at the neck region (12) of the internal preform (11).

4. A process for the manufacturing of an assembled preform (1) for the making of a double-walled blown container according to the preceding claims,
**characterized in that** the process comprises the following steps:
- Separate forming of said external preform (10) and said internal preform (11) by an injection moulding process for each preform (10,11);
- Inserting of said internal preform (11) inside said external preform (10) until the neck part (12) of the internal preform (11) abuts on the neck part (3) of the external preform (10);
- Exerting a thrust force onto the internal preform (11) towards the inside of the external preform (10) by forcing the coupling by interference through said locking means (13,14,16) onto the surfaces (12) and (3) of the respective neck regions of said preforms (10,11); and
- Obtaining an assembled preform (1) in an assembled and irreversibly locked arrangement.

## Patentansprüche

1. Zusammengesetzter Vorformling (1) zur Herstellung eines doppelwandigen geblasenen Behälters, umfassend einen ersten äußeren Vorformling (10), der einen Halsteil (2) mit einem Außenbereich (4), der einen Gewindebereich (5) und einen Innenbereich (3) einschließt, und einen zweiten inneren Vorformling (11) umfasst, der innerhalb des ersten äußeren Vorformlings (10) angeordnet ist, wobei der innere Vorformling (11) einen Halsbereich (12) zum verriegelten Zusammenwirken mit dem inneren Halsbereich (3) des äußeren Vorformlings (10) aufweist, und wobei zwischen dem äußeren Vorformling (10) und dem inneren Vorformling (11) ein Innenvolumen (6) des Zwischenraums zwischen dem äußeren Vorformling (10) und dem inneren Vorformling (11) definiert ist, wobei das Innenvolumen (6) zum Enthalten eines Gases ausgelegt ist,
wobei der Halsbereich (12) des inneren Vorformlings (11) Verriegelungsmittel (13,14,16) zum Zusammenwirken durch eine Verriegelungsinterferenz mit dem inneren Bereich (3) des Halsteils (2) des äußeren Vorformlings (10) umfasst, wenn der innere Vorformling (11) in den äußeren Vorformling (10) eingesetzt wird, und wobei die Verriegelungsmittel zwei vorstehende ringförmige Kontaktierungsflächen (13,14) umfassen, die einstückig auf den Halsbereich (12) des inneren Vorformlings (11) angeformt sind, wobei die vorstehenden ringförmigen Flächen (13,14) zum Zusammenwirken durch eine Verriegelungsinterferenz mit jeweiligen Teilen des Halsbereichs (3) des äußeren Vorformlings (10) ausgelegt sind, wenn der erste in den zweiten eingesetzt wird,
wobei die Verriegelungsmittel eine ringförmige Kontaktierungsfläche (16) umfassen, die einstückig am Halsbereich (12) des inneren Vorformlings (11) ausgeformt ist, wobei die ringförmige Kontaktierungsfläche (16) dazu ausgelegt ist, durch eine Verriegelungsinterferenz mit einem jeweiligen Teil des Halsbereichs (3) des äußeren Vorformlings (10) zusammenzuwirken, wenn der erste in den zweiten eingesetzt wird,
wobei die Verriegelungsinterferenz zwischen den beiden Vorformlingen (10,11) im Bereich von 0,02 mm bis 0,5 mm ausgewählt ist,
**dadurch gekennzeichnet, dass** der innere Vorformling (11) ferner Folgendes umfasst:
- der vorstehende Kontaktierungsbereich (13) an der Außenfläche des Halsbereichs (12) aus einem im Wesentlichen glatten ringförmigen Bereich besteht,
- der vorstehende Kontaktierungsbereich (14) an der Außenfläche des Halsbereichs (12) aus einem vorstehenden ringförmigen Rand besteht, der eine Reihe von vertikalen Nuten (110) aufweist;
- eine Reihe von Öffnungen (15), die jeweils wie ein rechteckiger Schlitz ausgestaltet und am Halsbereich (12) umlaufend ausgeformt sind, wobei eine jede Öffnung (15) die Außenfläche des Halsbereichs (12) mit der Innenfläche des letzteren verbindet und wobei eine jede Öffnung (15) mit einer länglichen und vertikal ausgestalten Nut (150) kommuniziert, die an der Innenfläche des Halsbereichs (12) angeordnet und ausgeformt ist; und
- an einem Bereich unterhalb des vorstehenden Kontaktierungsbereichs (14) eine Reihe von vorstehenden Elementen (111) auf die Oberfläche des inneren Vorformlings (11) angeformt sind, wobei die Elemente (111) eine Längsform aufweisen und in Bezug auf die Längsachse des inneren Vorformlings (11) geneigt angeordnet sind.

2. Zusammengesetzter Vorformling (1) nach dem vorhergehenden Anspruch, wobei der interne Vorformling (11) ferner Folgendes umfasst:
- die Kontaktierungsfläche an der Außenfläche des Halsbereichs (12) des inneren Vorformlings (11) aus einer kontinuierlichen, im Wesentlichen glatten ringförmigen Fläche (16) besteht;
- die Kontaktierungsfläche (16) eine Vielzahl von Längsnuten (110) aufweist, von denen eine jede mit einer jeweiligen Nut (150) kommuniziert, die auf der Innenfläche des Halsbereichs (12) angeformt ist, und eine jede mit der anderen durch eine jeweilige Öffnung (15) kommuniziert; und
- in einem Bereich unterhalb der Kontaktierungsfläche (16) eine Reihe von vorstehenden Elementen (111) auf die Oberfläche des inneren Vorformlings (11) angeformt sind, wobei die Elemente (111) eine Längsform aufweisen und in Bezug auf die Längsachse des Vorformlings (11) geneigt angeordnet sind.

3. Zusammengesetzter Vorformling (1) nach einem der vorhergehenden Ansprüche, wobei an der Innenfläche (3) des Halsbereichs (2) des äußeren Vorformlings (10) eine Reihe von Längsnuten (100) einstückig in das Material des Vorformlings (10) eingeformt ist, wobei die Anordnung der Reihe von Längsnuten (100) so ist, dass nach dem Zusammensetzen des Vorformlings (1) eine Reihe von bevorzugten Gasströmungskanälen vom/zum Innenvolumen (6) und durch den Halsbereich (12) des inneren Vorformlings (11) geschaffen wird, und
wobei die Anordnung der vorstehenden Elemente (111) des inneren Vorformlings (11) derart ist, dass nachdem der Vorformling (1) zusammengesetzt worden ist, eine Reihe von bevorzugten Gaskanälen geschaffen wird, die mit den Nuten (100) zusammenwirken, wobei die Anordnung derart ist, dass das Gas vom Innenvolumen (6) zur Außenseite des Vorformlings (1) und durch die Nuten (110), die Öffnungen (15) und die Nuten (150) am Halsbereich (12) des inneren Vorformlings (11) strömt.

4. Verfahren zur Herstellung eines zusammengesetzten Vorformlings (1) zur Herstellung eines doppelwandigen geblasenen Behälters nach den vorhergehenden Ansprüchen,
**dadurch gekennzeichnet, dass** das Verfahren die folgenden Schritte umfasst:
- Separates Formen des externen Vorformlings (10) und des inneren Vorformlings (11) durch einen Spritzgießprozess für einen jeden Vorformling (10,11);
- Einführen des inneren Vorformlings (11) in den äußeren Vorformling (10), bis der Halsteil (12) des inneren Vorformlings (11) an dem Halsteil (3) des äußeren Vorformlings (10) anliegt;
- Ausüben einer Schubkraft auf den inneren Vorformling (11) in Richtung des Inneren des äußeren Vorformlings (10), indem die Kopplung mittels Interferenz durch die Verriegelungsmittel (13,14,16) auf die Flächen (12) und (3) der jeweiligen Halsbereiche der Vorformlinge (10,11) gezwungen wird; und
- Erhalten eines zusammengesetzten Vorformlings (1) in einer zusammengesetzten und irreversibel verriegelten Anordnung.

## Revendications

1. Préforme assemblée (1) pour la fabrication d'un récipient soufflé à double paroi, comprenant une première préforme externe (10) qui comprend une partie de col (2) comportant une zone extérieure (4) qui inclut une zone filetée (5) et une zone intérieure (3), et une seconde préforme interne (11) disposée à l'intérieur de ladite première préforme externe (10), ladite préforme interne (11) comportant une zone de col (12) pour coopérer de manière verrouillée avec ladite zone de col interne (3) de ladite préforme externe (10), et dans laquelle, entre ladite préforme externe (10) et ladite préforme interne (11), il est défini un volume interne (6) d'espace intermédiaire entre la préforme externe (10) et la préforme interne (11), ledit volume interne (6) étant configuré pour contenir un gaz,
dans laquelle ladite zone de col (12) de ladite préforme interne (11) comprend des moyens de verrouillage (13, 14, 16) destinés à coopérer par une interférence de verrouillage avec ladite zone intérieure (3) de ladite partie de col (2) de ladite préforme externe (10) lorsque ladite préforme interne (11) est insérée dans ladite préforme externe (10), et dans laquelle lesdits moyens de verrouillage comprennent deux surfaces de contact annulaires saillantes (13, 14) formées d'un seul tenant sur ladite zone de col (12) de ladite préforme interne (11), lesdites surfaces annulaires saillantes (13, 14) étant configurées pour coopérer par une interférence de verrouillage avec des parties respectives de la zone de col (3) de ladite préforme externe (10) lorsque la première est insérée à l'intérieur de la seconde,
dans laquelle lesdits moyens de verrouillage comprennent une surface de contact annulaire (16) formée d'un seul tenant en correspondance de ladite zone de col (12) de ladite préforme interne (11), ladite surface de contact annulaire (16) étant configurée pour coopérer par une interférence de verrouillage avec une partie respective de la zone de col (3) de ladite préforme externe (10) lorsque la première est insérée à l'intérieur de la seconde,
dans laquelle ladite interférence de verrouillage entre lesdites deux préformes (10, 11) est choisie dans la plage comprise entre 0,02 et 0,5 mm,
**caractérisée en ce que** ladite préforme interne (11) comprend en outre :
- ladite zone de contact saillante (13) en correspondance de la surface extérieure de la zone de col (12) consiste en une zone annulaire sensiblement lisse,
- ladite zone de contact saillante (14) en correspondance de la surface extérieure de la zone de col (12) consiste en un bord annulaire saillant, qui comporte une série de rainures verticales (110) ;
- une série d'orifices (15) ayant chacun la forme d'une fente rectangulaire et étant formés de façon périphérique en correspondance de la zone de col (12), chaque orifice (15) mettant en communication ladite surface extérieure de la zone de col (12) avec la surface intérieure de cette dernière, et dans laquelle chaque orifice (15) communique avec une rainure (150) longitudinale et formée verticalement disposée et formée en correspondance de ladite surface intérieure de ladite zone de col (12) ; et
- en correspondance d'une zone située sous ladite zone de contact saillante (14), une série d'éléments saillants (111) sont formés d'un seul tenant sur la surface de la préforme interne (11), lesdits éléments (111) ayant une forme longitudinale et étant disposés de manière inclinée par rapport à l'axe longitudinal de ladite préforme interne (11).

2. Préforme assemblée (1) selon la revendication précédente, dans laquelle ladite préforme interne (11) comprend en outre :
- ladite surface de contact, en correspondance de ladite surface externe de ladite zone de col (12) de ladite préforme interne (11), est constituée d'une surface annulaire continue sensiblement lisse (16) ;
- ladite surface de contact (16) comportant une pluralité de rainures longitudinales (110) communiquant chacune avec une rainure (150) respective formée sur ladite surface intérieure de ladite zone de col (12) et communiquant chacune avec les autres par une ouverture respective (15) ; et
- en correspondance d'une zone située sous ladite surface de contact (16), une série d'éléments saillants (111) sont formés d'un seul tenant sur la surface de ladite préforme interne (11), les éléments (111) ayant une forme longitudinale et étant disposés de manière inclinée par rapport à l'axe longitudinal de la préforme (11).

3. Préforme assemblée (1) selon l'une quelconque des revendications précédentes, dans laquelle, en correspondance de ladite surface intérieure (3) de ladite zone de col (2) de ladite préforme externe (10), une série de rainures longitudinales (100) est formée d'un seul tenant dans le matériau de ladite préforme (10), la disposition de ladite série de rainures longitudinales (100) étant telle qu'une fois ladite préforme (1) assemblée, une série de canaux d'écoulement de gaz préférentiels depuis/vers ledit volume interne (6) est créée, et à travers ladite zone de col (12) de ladite préforme interne (11), et dans laquelle la disposition desdits éléments saillants (111) de ladite préforme interne (11) est telle qu'une fois ladite préforme (1) assemblée, une série de canaux de gaz préférentiels est créée en coopération avec lesdites rainures (100), la disposition étant telle que le gaz s'écoule du volume interne (6) vers l'extérieur de la préforme (1), et à travers lesdites rainures (110), lesdits orifices (15) et lesdites rainures (150) en correspondance de la zone de col (12) de la préforme interne (11).

4. Procédé de fabrication d'une préforme assemblée (1) pour la fabrication d'un récipient soufflé à double paroi selon les revendications précédentes,
**caractérisé en ce que** le procédé comprend les étapes suivantes :
- former de façon séparée ladite préforme externe (10) et ladite préforme interne (11) par un procédé de moulage par injection pour chaque préforme (10, 11) ;
- insérer ladite préforme interne (11) à l'intérieur de ladite préforme externe (10) jusqu'à ce que la partie de col (12) de la préforme interne (11) vienne se mettre en butée contre la partie de col (3) de la préforme externe (10) ;
- exercer une force de poussée sur la préforme interne (11) vers l'intérieur de la préforme externe (10) en forçant l'accouplement par interférence à travers lesdits moyens de verrouillage (13, 14, 16) sur les surfaces (12) et (3) des zones de col respectives desdites préformes (10, 11) ; et
- obtenir une préforme assemblée (1) dans une disposition assemblée et verrouillée de manière irréversible.
